Europäisches Patentamt

European Patent Office

Office européen des brevets

(19)

(11) Publication number: **0 305 527**
**A1**

## (12) EUROPEAN PATENT APPLICATION
published in accordance with Art. 158(3) EPC

(21) Application number: **88901298.5**

(22) Date of filing: **27.01.88**

Data of the international application taken as a basis:

(86) International application number:
**PCT/JP88/00063**

(87) International publication number:
**WO88/07236 (22.09.88 88/21)**

(51) Int. Cl.³: **G 06 F 7/00**
**G 06 F 9/38, G 06 F 15/16**

(30) Priority: **18.03.87 JP 61133/87**

(43) Date of publication of application:
**08.03.89 Bulletin 89/10**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **YONEKURA, Mikio**
**Keio Takao Mansion 1103 1231-36, Hatsuzawamachi**
**Hachioji-shi Tokyo 193(JP)**

(74) Representative: **Brunner, Michael John et al,**
**GILL JENNINGS & EVERY 53-64 Chancery Lane**
**London WC2A 1HN(GB)**

(54) HIGH-SPEED FLOATING POINT ARITHMETIC UNIT.

(57) A high-speed floating point arithmetic unit having arithmetic sections (4, 5), wherein arithmetic operation is performed based upon operation data written from a host computer, and the resultant is read into the host processor. A bidirectional register (1) is provided in a data path leading to the host processor, and the operation is started in response to data writing and reading control from the host processor. To write the operation data sent from the host processor, the operation data are once stored in the bidirectional buffer register (1), and the arithmetic sections (4, 5) are stopped so that the operation data can be written. To read the operation results sent to the host processor, the operation results are stored in the bidirectional buffer register (1), and the arithmetic sections (4, 5) are readily liberated from the stopped condition by a host processor access controller (2).

Fig. 4

# DESCRIPTION

## TITLE OF THE INVENTION
Fast Floating Point Processor

## TECHNICAL FIELD

The present invention relates to a fast floating point processor.

## BACKGROUND ART

As the speed of floating point calculation is very slow in general purpose processors, fast floating point processors (hereinafter called FFP), which use a hardware construction for floating point calculation only, are used for that purpose.

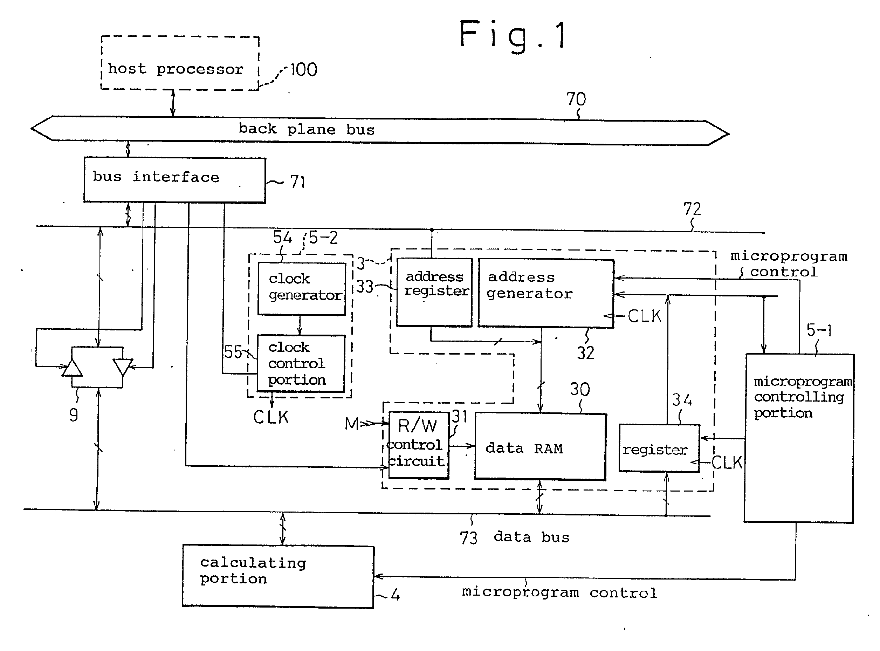

Figure 1 shows an outline of the construction of an example of a conventional fast floating point processor (FFP). In Fig. 1, reference numeral 100 is a host processor, and is connected to the FFP through a back plane bus 70 and a bus interface 71.

The FFP in Fig. 1 comprises a calculating portion 4, a microprogram controlling portion 5-1, a clock generating portion 5-2, and a data storing portion 3, as a basic construction, and further comprises a two-way buffer 9.

The calculating portion 4 reads the data for calculation from the data storing portion 3, executes calculation, and writes the calculation results again in the data storing portion 3.

The microprogram controlling portion 5-1, in which a microprogram is written in advance, controls the data storing portion 3 and the calculating portion 4 in accordance with the microprogram.

The clock generating portion 5-2 comprises a clock generator 54 and a clock control portion 55. Clock pulses generated at the clock generator 54 are output through the clock control portion 55, and synchronize the microprogram controlling portion 5-1 and all portions controlled by the microprogram controlling portion 5-1 in the FFP.

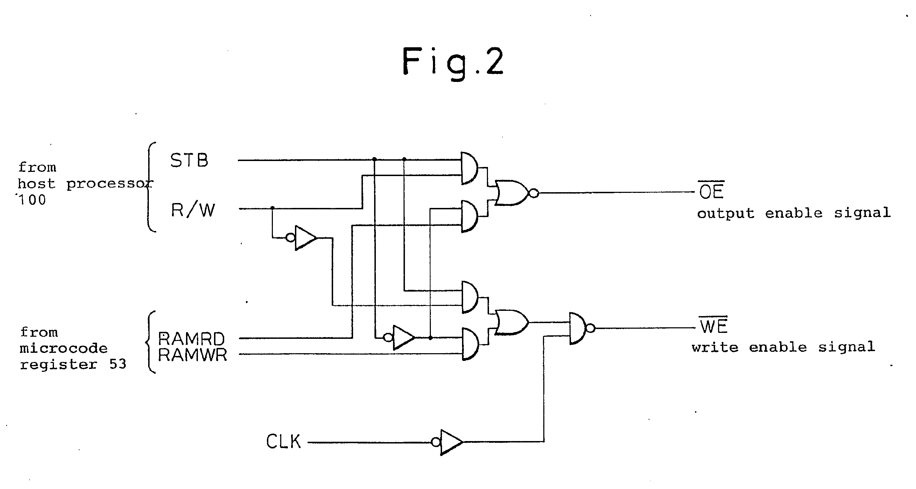

The data storing portion 3 comprises a data RAM 30, a R/W (read/write) control circuit 31, an address generator 33, an address register 33, and a register 34. The data for calculation sent through the two-way buffer 9 and data bus 73 from the host processor 100 is temporarily written in the data RAM 30, and next the data for calculation is read out therefrom to the calculating portion 4. The calculation results of the calculating portion 4 are written again in the data RAM 30, and read out by the host processor 100. The R/W control circuit 31 outputs an output enable signal or a write enable signal to the data RAM 30, under the control of the microprogram controlling portion 5-1 (shown by a symbol "M" in Fig. 1) in the case of a data transfer between the data RAM 30 and the calculating portion 4, and by receiving an R/W (read/write) signal and a strobe signal from the host processor 100 in the case of a data transfer between the data RAM 30 and the host processor 100. An example of construction of the R/W control circuit 31 is shown in Fig. 2.

The address generator 32 outputs an address of the data RAM 30 under the control of the microprogram controlling portion 5-1 in the case of a data transfer between the data RAM 30 and the calculating portion 4. The addressing is carried out through the address register 33 in the case of a data transfer between the host processor 100 and the data RAM 30. The register 34 is provided for transferring data from the data RAM 30 to the microprogram controlling portion 5-1, or to the address generator 32.

The two-way buffer 9 is made by connecting two buffers in parallel with each other, one of which is used for transferring data from the host computer 100 to the data RAM 30, and the other of which is used for

0305527

transferring data in the opposite direction as shown in Fig. 1. Both buffers are usually in the high-impedance state, and the host computer 100 and the data RAM 30 are electrically isolated. Each of the buffers is made ON by the host processor 100, and enables a data transfer.

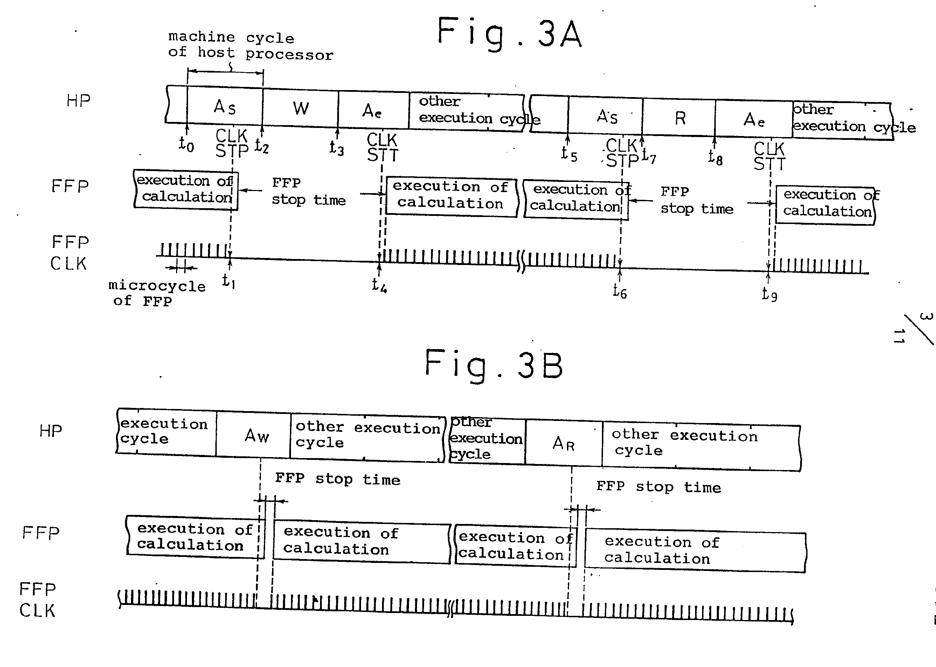

Figure 3A shows the timing of writing data from the host processor (hereinafter called HP in Figs. 3A and 3B) 100 to the data RAM 30, and reading data from the data RAM 30 to the host processor 100 in the conventional fast floating point processor (FFP) shown in Fig. 1. In Fig. 3A, the execution cycles in the host processor (HP) 100 are shown in (a), the executing time of the calculation and stop time in the FFP are shown in (b), and the timing of the clock pulse (CLK) in the FFP is shown in (c).

$A_s$ indicates a cycle in which the host processor 100 outputs a signal to stop the clock pulse (clock stop signal). When the clock stop signal is input to the clock control portion 55 in the FFP, the clock control portion 55 stops the output of the clock pulse in the FFP (time $t_1$), and thus the execution of the calculation in the FFP is stoped.

Next, the host processor 100 opens a (tri-state) buffer in the two-way buffer 9 which is directed from the host processor 100 to the data RAM 30, makes the R/W signal "0", and outputs a strobe signal to the R/W control circuit 31, and thus the writing of data from the host processor 100 to the data RAM 30 is begun (time $t_2$).

In Fig. 3A, a symbol "W" indicates a cycle in which data is written from the host processor 100 to the FFP.

When the writing of data from the host processor 100 to the data RAM 30 is completed at time $t_3$, a cycle $A_e$, in which the stop of the FFP is released, as the next machine cycle of the host processor 100, is started, and a clock restart signal for releasing the stop of the clock pulse is output from the host processor 100. The clock control portion 55 receives the clock restart signal (time $t_4$), and restarts the output of the clock pulse, and thus the FFP restarts the execution of the calculation.

When reading from the host processor 100, as shown at the right side of Fig. 3A, the timing relationships are the same as in the case mentioned above. The only difference between the reading case and the writing case exists in the cycle of reading data from FFP to the host processor 100, which cycle starts at time $t_7$. At this time, the host processor 100 opens the buffer directed to the host processor 100 in the two-way buffer register 9, makes the R/W signal "1", and applies it to the R/W control circuit 31 together with the strobe (STB) signal. Thus the R/W control circuit outputs a data enable signal ($\overline{OE}$) to the data RAM 30, and consequently, data is read from the data RAM 30 to the host processor 100.

As understood in Fig. 3A, when transferring data between the FFP having the construction of Fig. 1 and the host processor 100, when writing from or reading to the host processor, the stop time of the FFP is about twice the machine cycle of the host processor 100. In the example of Fig. 1, in practice, this time is about 2 $\mu$ sec.

Since, in the conventional fast floating point processor as shown in Fig. 1, the host processor directly accesses the data RAM 30 of the FFP, the FFP must be stopped for each cycle of reading to or writing from the host processor (about 2 $\mu$ sec in the example of Fig. 1). The reading and writing cycles of the host processor 100, however, are much slower than the microcycle of the FFP (0.1 $\mu$ sec in the example of Fig. 1).

Therefore, in the FFP of the conventional construction as shown in Fig. 1, the FFP must be stopped for a very long time when transferring data to or from the host processor, and consequently, the efficiency of the execution of the calculation is low.

DISCLOSURE OF THE INVENTION

An object of the present invention is to provide a fast floating point processor wherein the stop time of the calculation when writing from and reading to the host processor, is reduced.

The fast floating point processor according to the present invention comprises: a calculating portion which carries out arithmetic calculations and comparison/logic calculations; a data storing portion in which data for calculation sent from a host processor is written, and from which the data for calculation is read out to the calculating portion, and in which a calculation result in the calculating portion is written, and from which the calculation result is read out to the host processor; a fast floating point processor controlling portion which controls the arithmetic calculations and comparison/logic calculations in the calculating portion and the writing and reading by the calculating portion in the data storing portion, a controlling portion for assisting access by host processor which controls the fast floating point processor controlling portion to temporarily stop the fast floating point processor controlling portion and the calculating portion, and enables a writing and reading of the data storing portion by the host processor during the stop; characterized in that a two-way buffer register is provided on a path through which data for calculation is written in the data storing portion from the host processor and the calculation result is read out from the data storing portion to the host processor; and the controlling portion for assisting access by host processor, when writing the data for calculation from the host processor, temporarily loads the data for calculation in the two-way buffer register, stops the fast floating point processor controlling portion and the calculating portion, and then writes the data for calculation in the data storing portion, and when reading the calculation result to the host processor, reads the calculation result from the data storing portion, then temporarily loads said result in the two-way buffer register, and then immediately releases the stop of the fast floating point processor controlling portion and the calculating portion.

BRIEF DESCRIPTION OF THE DRAWINGS

Figure 1 shows an outline of the construction of an example of the conventional fast floating point processor (FFP);

Figure 2 shows an example of the construction of a R/W control circuit 31;

Figure 3A shows a conventional timing of reading and writing data;

Figure 3B shows the timing of reading and writing data in an embodiment of the present invention;

Figure 4 shows the basic construction of the present invention;

Figure 5A shows an example of the construction of the fast floating point processor (FFP) according to the present invention;

Figure 5B shows a construction of the two-way buffer register 1 in Fig. 2A;

Figure 5C shows an example of the construction of the controlling portion for assisting access by the host processor 2 in Fig. 2A; and

Figures 6A and 6B show the timing of the controlling portion for assisting access by the host processor 2.

BEST MODE FOR CARRYING OUT THE INVENTION

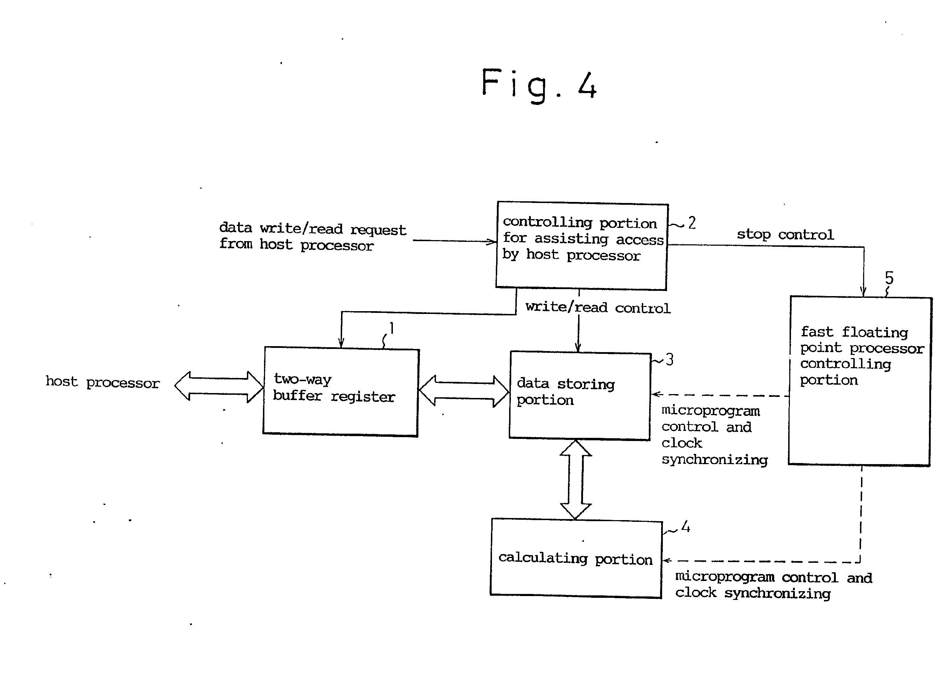

Figure 4 shows the basic construction of the fast floating point processor according to the present invention. In Fig. 4, reference numeral 1 is a two-way buffer register, 2 is a controlling portion for assisting access by host processor, 3 is a data storing portion, 4 is a calculating portion, and 5 is a fast floating point processor controlling portion.

The two-way buffer register 1, under the control of the controlling portion for assisting access by host processor 2, temporarily loads data for calculation from the host processor, or temporarily loads a calculation result read out from the data storing portion 3.

The data for calculation sent from the host processor and loaded in the two-way buffer register 1 is then written in the data storing portion 3, and then the data for calculation is read out to the calculating portion. The calculation result obtained by the execution of a calculation in the calculating portion 4 is again written in the data storing portion 3, and then read out and loaded in the two-way buffer register 1.

The calculating portion 4 reads the data for calculation from the data storing portion 3, executes calculation, and writes the calculation results again in the data storing portion 3.

The fast floating point processor controlling portion 5 controls the data storing portion 3 and the calculating portion 4 to operate as mentioned above.

The controlling portion for assisting access by host processor 2, when receiving a request for reading to or writing from the host processor 100, carries out a control of loading data in the two-way buffer register 1, a stop control of the fast floating point processor controlling portion 5, and a control of writing and reading in the data storing portion 3.

When the host processor commands the FFP to

0305527

execute a calculation, the host processor outputs a request for writing data to the controlling portion for assisting access by host processor 2. The controlling portion for assisting access by host processor 2 controls the two-way buffer register 1 to load the data for the calculation sent from the host processor. Next the controlling portion for assisting access by host processor 2 controls the fast floating point processor controlling portion 5 to stop the fast floating point processor controlling portion 5 and the calculating portion 4, makes the data storing portion 3 writable, and then controls the two-way buffer register 1 to output the loaded data for the calculation into the data storing portion 3. When writing the data for the calculation in the data storing portion 3 is completed, the controlling portion for assisting access by host processor 2 releases the stop control to the fast floating point processor controlling portion 5, and therefore, the FFP again starts the execution of the calculation.

When the host processor reads the calculation result from the FFP, the host processor outputs a request for reading data to the controlling portion for assisting access by host processor 2. The controlling portion for assisting access by host processor 2 controls the fast floating point processor controlling portion 5 to stop the fast floating point processor controlling portion 5 and the calculating portion 4. Next the controlling portion for assisting access by host processor 2 controls the data storing portion 3 to read the calculation result stored in the data storing portion 3, and controls the two-way buffer register 1 to load the calculation result in the two-way buffer register 1. The controlling portion for assisting access by host processor 2, after the above loading in the two-way buffer register 1, immediately releases the stop control to the fast floating point processor controlling portion 5, and thus the FFP restarts the execution of the calculation. Subsequently, the host processor reads out the calculation result loaded in the two-way buffer register 1.

According to the present invention, a transfer of data for calculation and the calculation result between the host processor and the fast floating point processor (FFP) is carried out at the two-way buffer register 1, the data storing portion 3 need not be stopped through the operation of writing or reading by the host processor, and the data transfer between the two-way buffer register 1 and the data storing portion 3 can be carried out by stopping the fast floating point processor controlling portion 5 and the calculating portion 4 only for a writing or reading cycle in the FFP. Therefore, the stop time of the execution of the calculation is reduced, and a highly efficient execution of a calculation is realized.

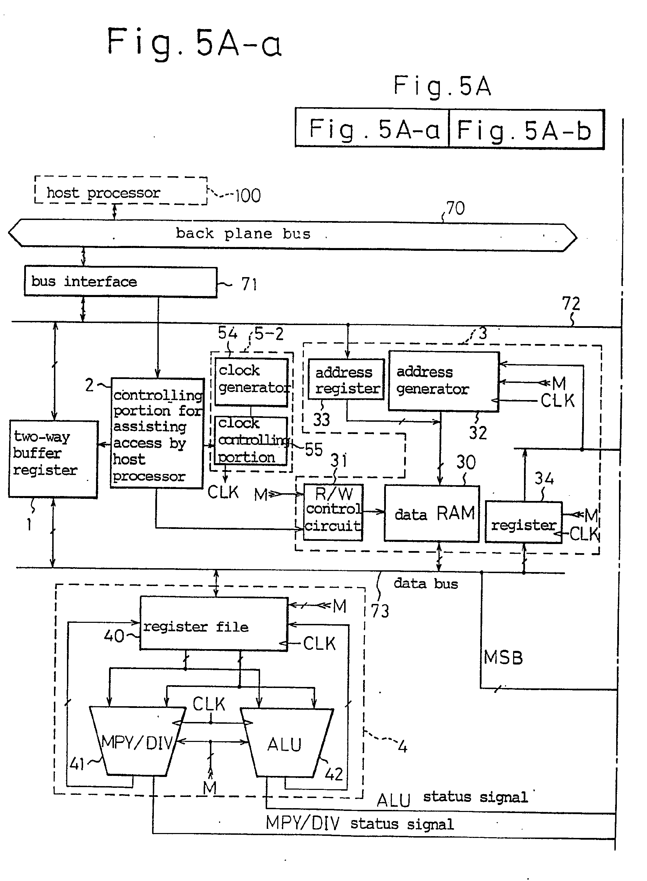

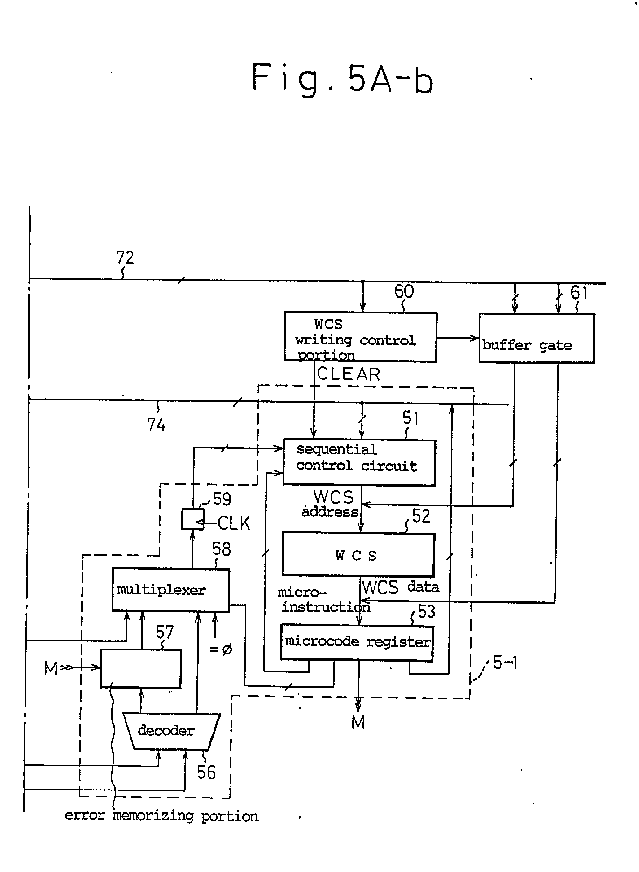

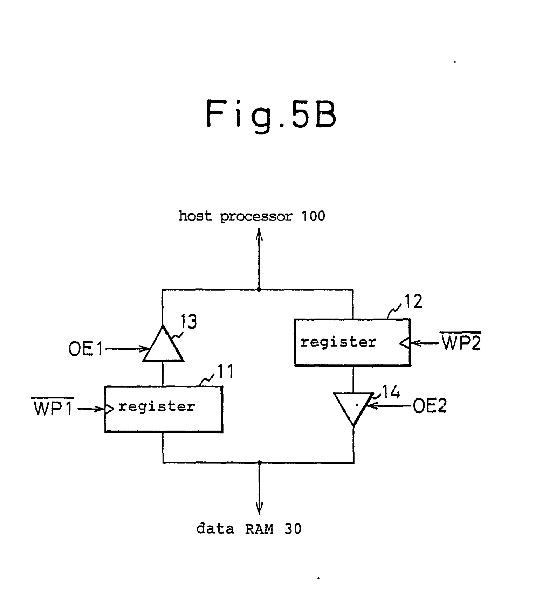

Figures 5A and 5B shows an example of the construction of the fast floating point processor (FFP) according to the present invention.

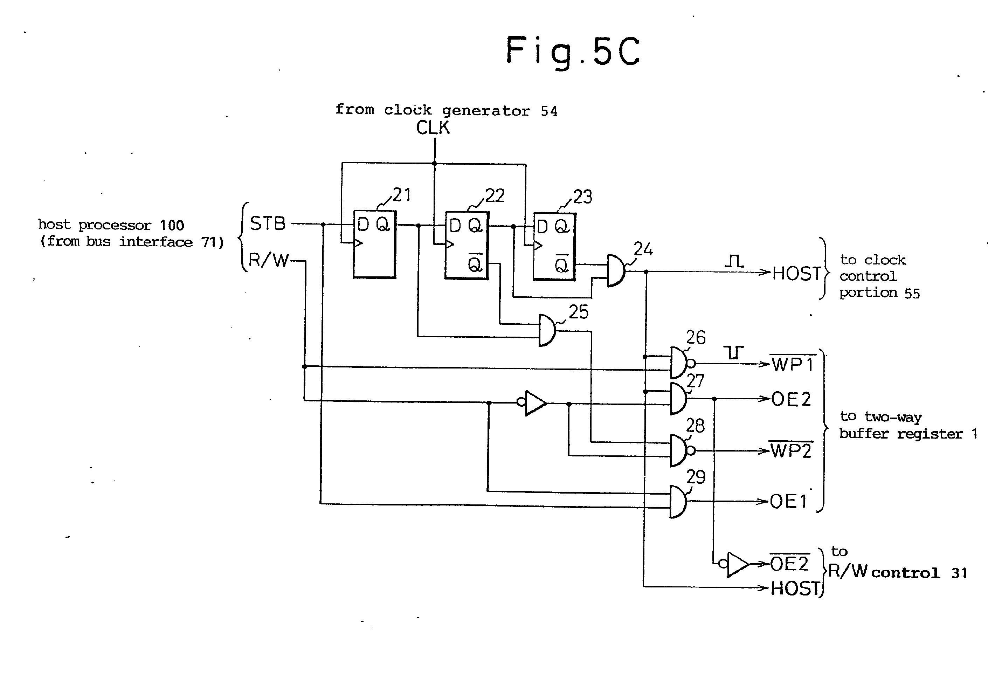

In the construction of Fig. 5A, the connection to the host processor 100 through the back plane bus 70 and the bus interface 71, the construction and the function of the data storing portion 3 and the clock generating portion 5-2, and the function of the microprogram controlling portion 5-1 and the calculating portion 4, are the same as in the FFP in Fig. 5. More details of the internal construction of the microprogram controlling portion 5-1 and the calculating portion 4 are shown in Fig. 5A. As the detailed internal construction of the microprogram controlling portion 5-1 and the calculating portion 4 does not directly relate to the present invention, it is briefly explained hereinafter.

The calculating portion 4 comprises a register file 40, a floating point multiplier/divider (MPY/DIV)

41, and a floating point arithmetic logic unit (ALU) 42.
. The register file 40 reads data for calculation from the data RAM 30, and supplies the data to the MPY/DIV 41, under the control of the microprogram controlling portion 5-1, or holds the data during the calculation and the final calculation result therein. The final calculation result is written in the data RAM 30 from the register file 40.

The ALU 42 executes addition/subtraction calculations and comparison/logic calculations, and the MPY/DIV 41 executes multiplication/division calculations. Each of the ALU 42 and the MPY/DIV 41 has two kinds of outputs, respectively. One is the output of the results of arithmetic calculations such as the addition/subtraction calculations or multiplication/div ision calculations, and these results of arithmetic calculations are input to the register file 40. The other output from each of the ALU 42 and the MPY/DIV 41 comprises status signals showing the results of the comparison/logic calculations or the occurence of errors during the calculations. As mentioned later, the microprogram controlling portion 5-1 decodes the status signal and determines the microinstruction to be executed next.

The microprogram controlling portion 5-1 comprises a sequential control circuit 51, the writable control storage (hereinafter called WCS) 52, a microcode register 53, a decoder 56, an error memorizing portion 57, a multiplexer 58, and a register 59.

The WCS consists of a RAM, and a microprogram from the host processor 100 is written in the WCS 52 at the beginning of the execution of the FFP. When a WCS writing control portion 60 in Fig. 5A receives a request for writing of a program from the host processor 100, it holds the sequential control circuit 51 at the initial state by applying a CLEAR signal output to the sequential control circuit 51, and opens a buffer gate 61. WCS addresses and WCS data (microinstruction) from the host processor 100 are input to the WCS 52 through the two gates of the buffer gate 61.

When the sequential control circuit 51 outputs the address of the WCS 52, a microinstruction stored at the address is loaded in the microcode register 53, and the microinstruction is executed. Here, the status signals from the calculating portion 4 are decoded through a decoder 56, the error memorizing portion 57, and the multiplexer 58, and the contents of the status signals are loaded in the register 59 in turn. The sequential control circuit 51 outputs the next address based on the content of the register 59. The microprogram controlling portion 5-1 operates as mentioned above.

The FFP is controlled by the microprogram controlling portion 5-1 and the clock generating portion 5-2 as mentioned above, and these 5-1 and 5-2 constitute the fast floating point processor controlling portion 5.

Among the portions in Fig. 5A, the two-way buffer register 1, which is provided on the path for transferring data between the host processor 100 and the data RAM 30, and the controlling portion for assisting access by host processor 2, which receives the signals for the requests for writing data and reading data (the aforementioned R/W signal and strobe signal) from the host processor 100 and controls the two-way buffer register 1, the clock control portion 55, and the R/W control circuit 31, are different from the aforementioned construction of Fig. 1.

The construction of the two-way buffer register 1 is shown in Figure 5B. In Fig. 5B, reference numerals 11, 12 are registers to which applied data are written under the control (a signal $\overline{WP1}$ and $\overline{WP2}$) of the controlling portion for assisting access by host processor 2, and reference numerals 13, 14 are (tri-state, or three-state) buffers which output data under the control (a

signal $\overline{OE1}$ and $\overline{OE2}$) of the controlling portion for assisting access by host processor 2.

The construction of the controlling portion for assisting access by host processor 2 is shown in Figure 5C. In Fig. 5C, reference numerals 21, 22, 23 are D flip-flop circuits, 24, 25, 27, 29 are AND circuits, and 26, 28 are NAND circuits.

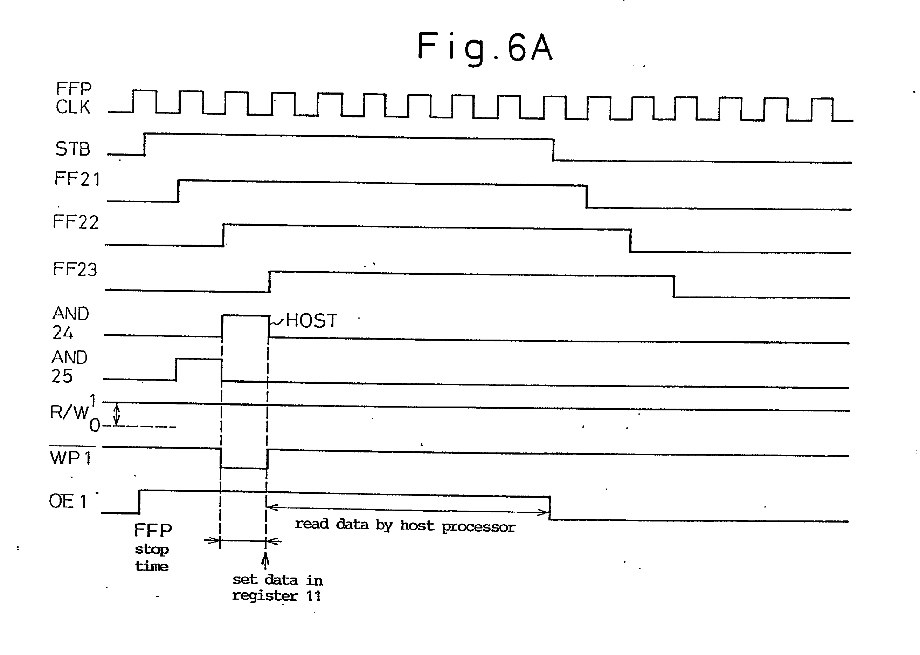

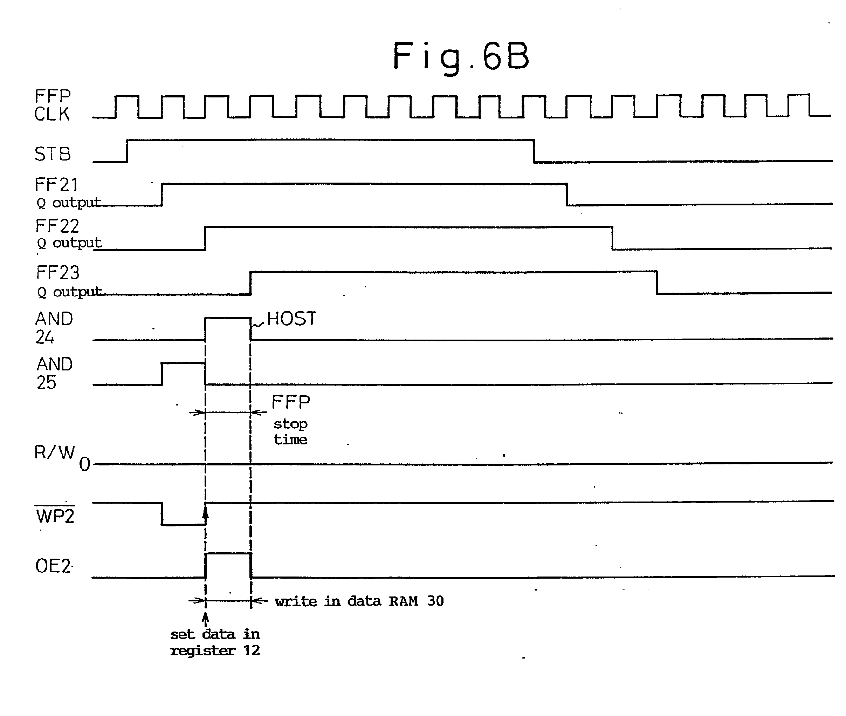

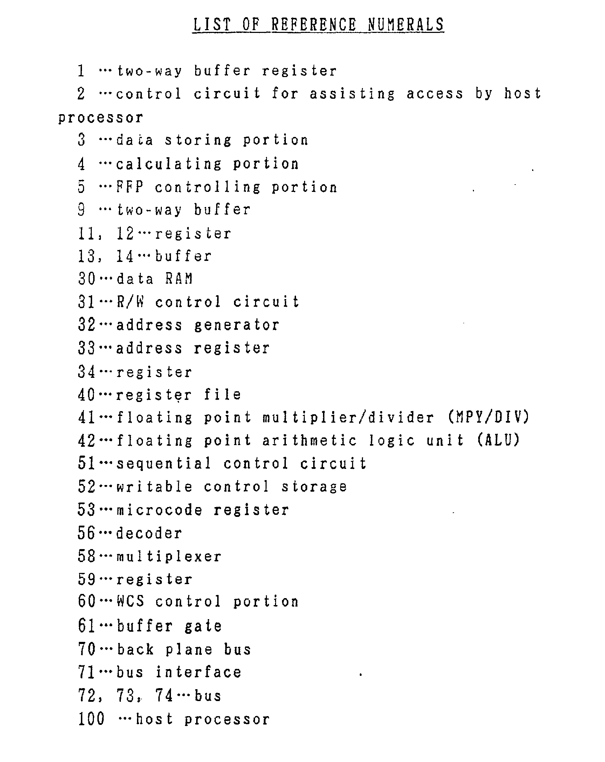

Figures 6A and 6B show the timing of the controlling portion for assisting access by the host processor 2.

Figure 6A shows the timing when reading data in the data RAM 30 to the host processor 100. As shown in Fig. 5C, a strobe signal (STB) and a read/write (R/W) signal are input to the controlling portion for assisting access by the host processor 2 from the host processor 100 through the bus interface 71. These signals are input to the R/W control circuit 31 through the bus interface 71 in the conventional construction of Fig. 1 (Fig. 2). Here, the R/W signal is always in the state "0" at the time of writing data, and always in the state "1" at the time of reading data. As the operation of the circuit can be readily understood, only the input-output relationships are explained here.

As shown in Fig. 6A, when the R/W signal is in the state "0", the outputs are "HOST", "$\overline{WP1}$", and "OE1". The HOST is input to the clock controlling portion 55 in Fig. 5A, and stops the clock pulses which synchronize the FFP. The $\overline{WP1}$ is applied as a trigger input of the register 11 in the two-way buffer register 1, as shown in Fig. 5B. As shown in Fig. 6A, at the timing of leading edge of the $\overline{WP1}$, the data transferred from the data RAM 30 is set in the register 11. Another output OE1 is applied as a control input of a (tri-state, or three-state) buffer 13, in the two-way buffer register 1 in Fig. 5B. As the signal OE1 becomes "1" at the same time as the strobe signal from the bus interface 71, the data loaded in the register 11 after the data is set in the register 11 and before the strobe signal becomes "0", is read by the host processor 100. At this time, the above HOST signal, and an $\overline{OE2}$ signal which is an inversion of an OE2 signal, are input to the R/W control circuit 31 instead of the strobe signal and the R/W signal. Since the OE2 is "0" when reading data, the data is read, as understood by Fig. 2, when the above HOST signal becomes "1", i.e., when the $\overline{WP1}$ becomes "0". This data is set in the register 11. When the data is set in the register 11, the HOST returns to "0", and therefore, the stop control of the clock pulses of the clock control portion 55 is stopped, i.e., the stop of the clock pulses is released when the setting data in the register 11 is completed. The stop time of the clock pulse is one cycle time of the clock pulse in the FFP.

Next, the timing of writing data from the host processor 100 to the data RAM 30 is explained with reference to Fig. 6B. As the operation of the circuit of Fig. 5C is readily understood, only the outputs "HOST", "$\overline{WP2}$", and "OE2" are explained in this case.

The HOST signal plays the same role as in the case of Fig. 6A. The output $\overline{WP2}$ is applied as a trigger input of the register 12 in the two-way buffer register 1 as shown in Fig. 5B. The OE2 is applied as a control input of the (tri-state) buffer 14 in the two-way buffer register 1, and becomes "1" at the same time as the above HOST signal. The signal OE2 is inverted as an $\overline{OE2}$ signal and input to the R/W control circuit 31 together with the HOST, and then makes the R/W control circuit 31 output a write enable signal.

Therefore, first, after the data from the host processor 100 is set in the register 12 in the two-way buffer register 1 by the $\overline{WP2}$, then at the same time, the HOST signal stops the clock pulses which synchronize the FFP, and the HOST signal and the $\overline{OE2}$ signal operate on the R/W control circuit 31, and makes the data RAM 30 writable, and further, at the same time, the OE2 opens the (tri-state) buffer 14 in the two-way buffer register 1. Therefore, the data from the host processor 100 is written in the data RAM 30. In this case, the stop time of the FFP is one cycle time of the clock pulse in the FFP.

The timing of transferring data between the host processor 100 and the data RAM 30 in the FFP having a construction of Figs. 5A, 5B, and 5C, is shown in Fig. 3B.

In Fig. 3B, $A_W$ indicates a data writing cycle in the host processor 100, and $A_R$ is a data read cycle. As understood from the explanation of Figs. 6A and 6B, each of the stop time for data writing and the stop time for data reading is one microcycle of the FFP (0.1 $\mu$ sec in this embodiment).

As mentioned hitherto, in the fast floating point processor according to the present invention, the stop time for transferring data from and to the host processor is reduced, and therefore, a highly efficient execution of calculations becomes possible.

CLAIMS

1.  A fast floating point processor which comprises: a calculating portion (4) which carries out arithmetic calculations and comparison/logic calculations,

a data storing portion (3) in which data for calculation from a host processor is written, and from which said data for calculation is read out to said calculating portion (4), and in which a calculation result in said calculating portion (4) is written, and from which said calculation result is read out to said host processor,

a fast floating point processor controlling portion (5) which controls said arithmetic calculations and comparison/logic calculations in said calculating portion (4) and said writing and reading by said calculating portion (4) in said data storing portion (3),

a controlling portion for assisting access by host processor (2) which controls said fast floating point processor controlling portion (5) to temporarily stop said fast floating point processor controlling portion (5) and said calculating portion (4), and makes said data storing portion (3) writable and readable by said host processor during said stop,

characterized in that a two-way buffer register (1) is provided on a path through which said data for calculation is written in said data storing portion (3) from said host processor and said calculation result is read out from said data storing portion (3) to said host processor,

and said controlling portion for assisting access by host processor (2), when writing said data for calculation from said host processor, temporarily loads said data for calculation in said two-way buffer register (1), then stops said fast floating point processor controlling portion (5) and said calculating portion (4), and then writes said data for calculation in said data storing portion (3), and when reading said calculation result to said host processor, reads said calculation result from said data storing portion (3), then temporarily loads said calculation result in said two-way buffer register (1), and then immediately releases said stop of said fast floating point processor controlling portion (5) and said calculating portion (4).

# Fig.1

host processor ----100

70

back plane bus

bus interface ~ 71

72

54 5-2

microprogram control

clock generator

3
33

address register

address generator

CLK

32

5-1

55 clock control portion

CLK

30

34

microprogram controlling portion

M→ R/W control circuit

31

data RAM

register

CLK

9

73 data bus

calculating portion

~4

microprogram control

0305527

1/11

# Fig.2

from
host processor
100

{ STB

R/W

from
microcode
register 53

{ RAMRD
RAMWR

CLK

$\overline{OE}$
output enable signal

$\overline{WE}$
write enable signal

2/11

# Fig. 3A

machine cycle of host processor

| HP | | $A_s$ | W | $A_e$ | other execution cycle | | $A_s$ | R | $A_e$ | other execution cycle |

$t_0$ CLK STP $t_2$    $t_3$ CLK STT    $t_5$ CLK STP $t_7$    $t_8$ CLK STT

FFP: execution of calculation — FFP stop time — execution of calculation — execution of calculation — FFP stop time — execution of calculation

FFP CLK

microcycle of FFP    $t_1$    $t_4$    $t_6$    $t_9$

# Fig. 3B

| HP | execution cycle | $A_w$ | other execution cycle | other execution cycle | $A_R$ | other execution cycle |

FFP stop time    FFP stop time

FFP: execution of calculation | execution of calculation | execution of calculation | execution of calculation

FFP CLK

# Fig. 4

data write/read request from host processor →

controlling portion for assisting access by host processor ～2

stop control

write/read control

host processor ⟷ two-way buffer register ⟷ data storing portion ～3

fast floating point processor controlling portion ～5

microprogram control and clock synchronizing

calculating portion ～4

microprogram control and clock synchronizing

# Fig. 5A-a

## Fig.5A

| Fig.5A-a | Fig.5A-b |
|----------|----------|

0305527

# Fig. 5A-b

72

**WCS writing control portion** 60

**buffer gate** 61

CLEAR

74

**sequential control circuit** 51

59 —CLK

WCS address

58

**W C S** 52

**multiplexer**

WCS data

micro-instruction

57

microcode register 53

M→

= ∅

5-1

**decoder**

56

M

error memorizing portion

# Fig.5B

host processor 100

register  $\overline{WP2}$  12

OE1  13

$\overline{WP1}$  register  11

14  OE2

data RAM 30

# Fig.5C

from clock generator 54

CLK

host processor 100
(from bus interface 71)

STB

R/W

21  22  23

D Q  D Q  D Q
     Q̄    Q̄

24

HOST } to clock control portion 55

25

26  W̄P̄1̄

27  OE2

28  W̄P̄2̄

29  OE1

} to two-way buffer register 1

ŌĒ2̄
HOST } to R/W control 31

8/11

0305527

# Fig.6A

FFP
CLK

STB

FF21

FF22

FF23

AND
24    ~HOST

AND
25

R/W $\frac{1}{0}$

$\overline{WP1}$

OE 1

FFP
stop
time

read data by host processor

set data in
register 11

# Fig.6B

## LIST OF REFERENCE NUMERALS

1 ⋯ two-way buffer register

2 ⋯ control circuit for assisting access by host processor

3 ⋯ data storing portion

4 ⋯ calculating portion

5 ⋯ FFP controlling portion

9 ⋯ two-way buffer

11, 12 ⋯ register

13, 14 ⋯ buffer

30 ⋯ data RAM

31 ⋯ R/W control circuit

32 ⋯ address generator

33 ⋯ address register

34 ⋯ register

40 ⋯ register file

41 ⋯ floating point multiplier/divider (MPY/DIV)

42 ⋯ floating point arithmetic logic unit (ALU)

51 ⋯ sequential control circuit

52 ⋯ writable control storage

53 ⋯ microcode register

56 ⋯ decoder

58 ⋯ multiplexer

59 ⋯ register

60 ⋯ WCS control portion

61 ⋯ buffer gate

70 ⋯ back plane bus

71 ⋯ bus interface

72, 73, 74 ⋯ bus

100 ⋯ host processor

# INTERNATIONAL SEARCH REPORT

International Application No    PCT/JP88/00063

**I. CLASSIFICATION OF SUBJECT MATTER** (if several classification symbols apply, indicate all) 6

According to International Patent Classification (IPC) or to both National Classification and IPC

Int.Cl4     G06F7/00, 9/38, 15/16

**II. FIELDS SEARCHED**

| Minimum Documentation Searched 7 | |
|---|---|
| Classification System | Classification Symbols |
| IPC | G06F7/00, 9/38, 15/16 |

Documentation Searched other than Minimum Documentation
to the Extent that such Documents are Included in the Fields Searched 8

| | |
|---|---|
| Jitsuyo Shinan Koho | 1971 – 1988 |
| Kokai Jitsuyo Shinan Koho | 1971 – 1988 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| X | JP, A, 57-36350 (Toshiba Corp.) 27 February 1982 (27. 02. 82) (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited· to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 19, 1988 (19. 04. 88) | May 9, 1988 (09. 05. 88) |
| International Searching Authority | Signature of Authorized Officer |
| Japanese Patent Office | |

Form PCT ISA/210 (second sheet) (January 1985)